# EUROPEAN PATENT SPECIFICATION

(11) **EP 4 137 422 B1**
(45) Date of publication and mention of the grant of the patent: **03.09.2025**
(21) Application number: 20931343.6
(22) Date of filing: 14.04.2020
(51) Int. Cl.: B65G 1/04

(54) **AUTOMATED SYSTEM FOR THE STORAGE AND RETRIEVAL OF DIES**
AUTOMATISIERTES SYSTEM ZUM SPEICHERN UND WIEDERAUFFINDEN VON CHIPS
SYSTÈME AUTOMATIQUE DE STOCKAGE ET RÉCUPÉRATION DE POINÇONS

(43) Date of publication of application: 22.02.2023
(73) Proprietor: Eyher, S.L., 20018 Donostia (Guipuzcoa) (ES)
(72) Inventor: IMAZ ARCE, Guillermo Pedro, 20008 Donostia (ES); TROCAOLA ALBERDI, César, 20009 Donostia (ES)
(74) Representative: Evens, Paul Jonathan
(86) International application number: PCT/ES2020/070239
(87) International publication number: WO 2021/209649

(56) References cited:
- EP-A1- 1 284 225
- CN-A- 110 745 440
- CN-A- 110 745 440
- DE-A1- 102017 219 432
- GB-A- 1 346 027
- JP-A- 2007 137 599
- JP-A- 2009 007 124
- JP-A- 2009 007 125
- JP-A- S6 417 703
- US-A- 3 708 077
- US-A- 5 615 992
- US-A1- 2004 197 172
- US-A1- 2013 243 551
- US-A1- 2016 060 037
- US-B2- 9 415 933

## Description

### Technical field

In the automotive sector, both the leading brands and the companies dedicated to the manufacture of spare parts, and specifically those dedicated to the manufacture of parts making up the body of a vehicle, such as the flaps, hood, etc., manufacture these parts either by means of using dies which form the parts at hand through the stamping of sheet metal plates or by means of using molds which produce these parts through plastic or synthetic material injection.

In any case, the great variety of vehicle models existing on the market and even the design variants within one and the same model make it necessary for both the manufacturers of leading brands and the manufacturers of spare parts to have a large number of dies or molds which, when not in use, must be stored. In order to simplify the present description, reference will be made from now on to dies, although when reference is made to dies it should be understood that everything that is said for dies is valid for the case of injection molds.

### State of the art

Warehouses formed by the corresponding structure consisting of shelves and carriages carrying dies to the corresponding level of the different heights of the structure consisting of shelves in order to deposit them in their corresponding place or, conversely, to retrieve them from that storage point in the structure consisting of shelves so as to bring them to the place where they will be used, are already known.

Spanish invention patent ES2005404 already discloses a robotic carriage intended for removing or depositing dies from a corresponding warehouse in a fully automated manner.

Said carriage moves on rails, while the lifting frame is lifted to the desired position by means of a hydraulic cylinder. At this point, a cylinder causes the frame to move transversely towards the inside of the warehouse, bringing the roller platform of the frame closer to the die loading/unloading area.

Spanish utility model ES1006554U shows a modular warehouse for the storage of dies, which makes it easy for an automated robotic carriage to perform the maneuvers of introducing and removing dies. The warehouse comprises a guide intended for collaborating with an existing groove in the die, and rollers which facilitate the movement of the die but at the same time constitute respective guides for the entry of the platform of the robotic carriage.

United States patent US9415933B2 discloses a die warehouse in which the removal or deposition of dies is carried out in an automatic manner. In this case, the carriage moves on rails and its platform is lifted by the chains of a crane. Likewise, this platform also moves laterally to collect or deposit the desired die.

Specifically, in order to deposit a die, the platform is first fixed to the shelf of the warehouse and a table is lifted moving the die. Next, the platform moves laterally, bringing the die to its storage area, and then the table lowers, leaving the die in place on a support of a tray in the warehouse.

Finally, the platform, now without the die, moves to the carriage and the carriage returns to the initial position.

This document indicates that, as a result of this invention, it is possible to move dies or molds weighing close to forty tons.

European Patent EP2566789B1 discloses an automated warehouse for any type of articles, in which there is also a carriage which carries and collects articles from shelves, with both the shelves and the platform of the carriage having mutually reciprocating guides that allow a correct transverse movement without play.

However, these well-known solutions do not offer the necessary stability and robustness at the critical moment of transferring a die from the carriage to the platform or vice versa when the die is a large die that can exceed forty tons.

Another constraint lies in the fact that the known systems do not allow the development of automated die loading and unloading processes. US5615992A discloses a system according to the preamble of claim 1.

### Object of the invention

This twofold objective has led to the creation of the system object of the present invention as defined in claim 1 which, as is customary, is made up of the corresponding structure consisting of shelves, such that there is defined between every two rows of shelves a passageway for a transport carriage to move on rails.

The carriage is capable of moving according to an "X" axis between the shelves following rails and in a duly guided manner.

The carriage in turn preferably incorporates four columns arranged according to each of its corners and a platform. The platform is mechanically connected to the columns to be moved vertically according to the "Y" axis. For this purpose, the columns incorporate first linear movement means. The columns are synchronized with one another to carry out the vertical movement of the platform, such that it remains perfectly horizontal at all times.

The columns have guide elements in the upper part thereof, which are complementary to the channel elements located in the shelves which correspond to said guide elements. The carriage moves according to the X axis, being guided in the lower portion thereof by means of rolling elements and their respective channelings, as well as being guided in the upper portion thereof by means of the aforementioned guide elements and the channel elements, providing stability to the assembly formed by the carriage and the platform.

Among other advantages, this solution enables a load placed on the platform arranged in the carriage to move simultaneously according to the "X" and "Y" axes through movement of the carriage in the "X" axis and the movement of the platform in the "Y" axis at the same time.

This optimizes working times by taking advantage of the movements of the carriage to position its platform at the corresponding height. To that end, through the respective software, the platform of the carriage will move in height as the carriage moves towards the structure consisting of shelves, such that when the carriage reaches the corresponding point of the structure consisting of shelves, the platform is already at the level of the place where the corresponding die is to be removed or deposited. In the same way, when the carriage moves towards the supply area, the movement of the platform in height will be verified, so that the platform is at the corresponding height to remove or deposit the corresponding die upon reaching said supply area.

The platform incorporates support tables to contact and support the load to be transported. These tables comprise two parts, one upper part and one lower part. Likewise, these tables comprise linear movement means to be moved according to a "Z" axis, which will be referred to as the depth axis, both in a positive direction through the front part or side of the platform, and in a negative direction through a rear part or opposite side of the platform. These linear movement means allow the individual selection of the tables to be moved in the "Z" axis.

Accordingly, the linear movement means of the tables move the two parts of each of the selected tables, depending on the dimensions and/or weight of the load. Likewise, the tables comprise lifting means to move the upper part vertically with respect to the lower part according to the "Y" axis.

The tables, and more specifically the lower part of the tables, are provided with guiding means and both the frame of the platform and the shelves incorporate channeling means for said guiding means, such that, when the tables move in the "Z" axis, they are guided by complementary fitting of the guiding means in the channeling means.

The lifting means of the tables allow the load to be lifted with respect to the support provided by the shelves, such that the upper part of the tables and the load itself are prevented from contacting or brushing against the shelves during the placement and removal of the load.

The entire die loading and unloading process is fully automatic and does not require the participation of operators.

It has been envisaged that, in relation to each structure consisting of shelves, there is a supply area in which the die that must be carried by the transport carriage to the structure consisting of shelves will be deposited or the die which is brought by the transport carriage from the structure consisting of shelves will be removed by means of an overhead crane.

### Description of the figures

Figure 1 shows an elevational view of the lower rolling part of a transport carriage (1).
Figure 2 is an elevational view like the preceding figure, but now with the columns (6) already arranged on the carriage (1), allowing the arrangement thereof with respect to the shelves (2) to be seen.
Figure 3 is a schematic perspective view of the main frame or pole of a column (6).
Figure 4 is a perspective view from the upper part of the carriage (1).
Figure 5 is a perspective view from the lower part of the carriage (1).
Figure 6 is a perspective view of the assembly consisting of a frame (13) and tables (14) making up the platform (7) which is arranged on the carriage (1).
Figure 7 is a top plan view of the platform (7).
Figure 8 is a view showing the movement transmission system for transmitting movement according to the axis "Z" to the tables (14) of the platform (7).
Figure 9 is a perspective view of one of the tables (14) in its folded position.
Figure 10 is a top plan view of one of the tables (14).
Figure 11 is a view such as the one of Figure 9 but now with the table (14) depicted in the unfolding phase.
Figure 12 is the side elevational view of the table (14) depicted in Figure 11.
Figure 13 shows a partially sectioned elevational view in order to see the means which enable the movement of the tables (14) according to the "Z" axis.
Figure 14 is a perspective view showing the carriage between respective structures consisting of shelves (2).
Figure 15 is a view such as the preceding one, but with the front shelf (2) removed in order to be able to improve the visibility of the assembly.
Figure 16 is an elevational view showing a die or load to be transported (25) arranged on the platform (7) of the carriage.
Figures 17 and 18 are respective elevational and partially sectional views showing the die or load to be transported (25) arranged on a table (14) depicted in the folding and unfolding phases, respectively.

### Detailed description of the invention

As is customary, the system object of the present invention is made up of the corresponding structure consisting of shelves (2), such that there is defined between every two rows of shelves (2) a passageway for a transport carriage to move on rails.

According to the present invention, the transport carriage is made up of two frames, a lower frame identified with reference number (1) and another upper frame identified with reference number (13) which is part of an upper platform (7).

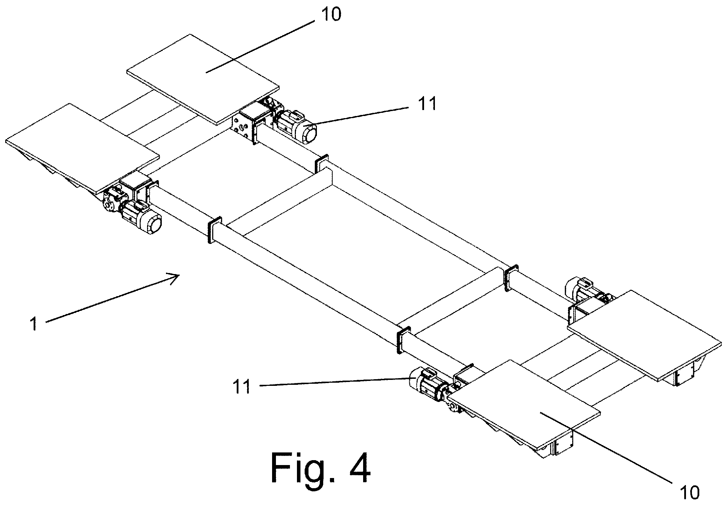

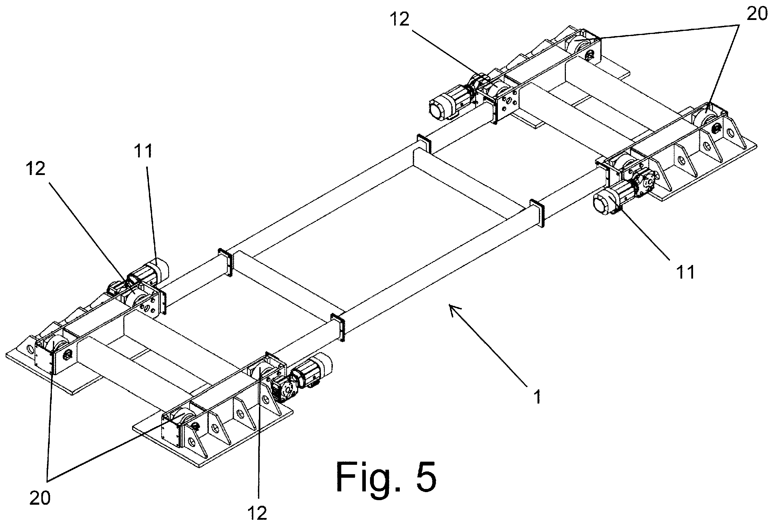

As shown in Figures 4 and 5, the lower frame (1) incorporates four motors (11) that move the respective wheels (12). Each wheel (12) is paired with a freely rotating wheel (20).

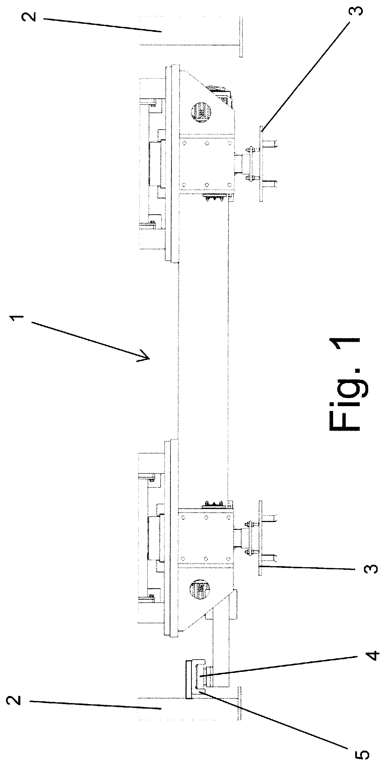

In this way, the lower frame (1), and accordingly the transport carriage, is capable of moving longitudinally according to the "X" axis, between the shelves (2). This movement is duly guided by means of rolling means (4) of the lower frame (1) running and moving along inverted U-shaped rails (5) fixed to the shelves (2), as shown in Figure 1.

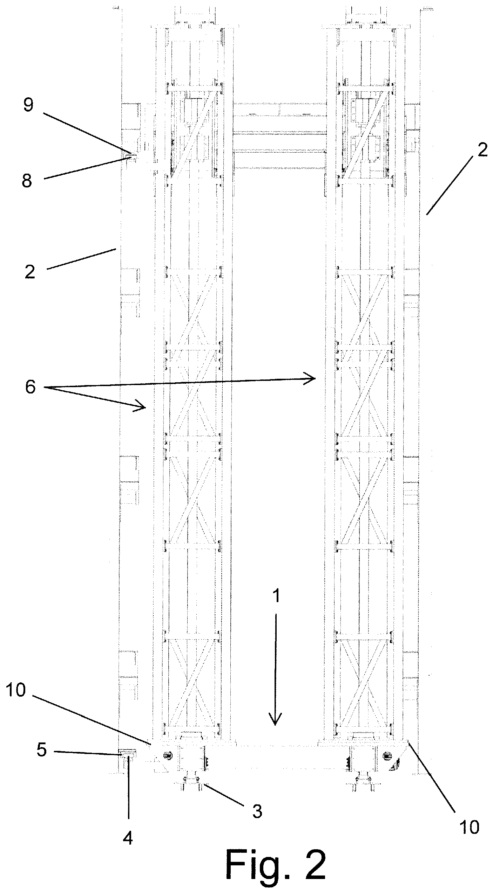

As shown in Figures 4 and 5, the lower frame (1) has in its upper part preferably four bases (10) arranged according to each of its corners. As shown in Figure 2, columns (6) which are supported on and fixed to the bases (10) are assembled in the lower frame (1).

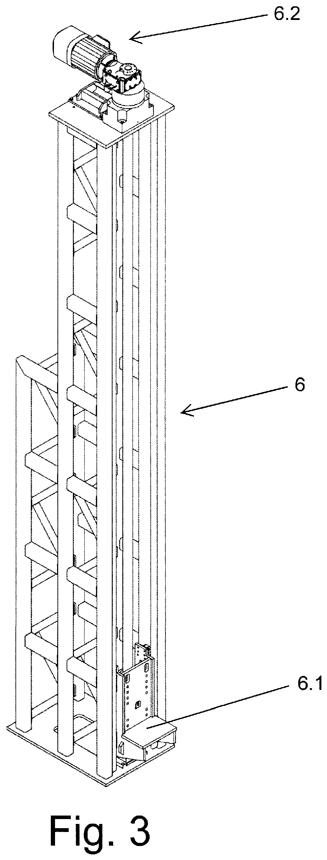

Figure 3 shows a non-limiting practical embodiment of such columns (6), according to which each column (6) incorporates a seat (6.1) capable of moving vertically as a result of the action of first linear movement means formed by the motors (6.2) which are arranged at the upper end of the column (6). These motors (6.2) move the seats (6.1) in the "Y" axis through a spindle-nut mechanism.

A platform (7), which is part of the upper frame (13) and which can therefore move vertically, according to the "Y" axis, is assembled mechanically connected to the columns (6), by means of the support and fastening thereof to the seats (6.1).

The motors (6.2) of the columns (6) are synchronized with one another to carry out the vertical movement of the platform (7), such that it remains perfectly horizontal at all times.

As shown in Figure 2, the columns (6) have, at the upper part thereof, guide elements formed by rolling means (8) that move along rails (9) fixed to the structure consisting of shelves (2). In this way, the carriage moves according to the "X" axis being guided in the lower portion thereof by means of the movement of the rolling means (4) on the rails (5) and additionally being guided in the upper portion thereof by means of the movement of the rolling means (8) on the rails (9), providing stability to the carriage as a whole.

This embodiment enables the simultaneous movement according to axes "X" and "Y" of a load or die which is arranged in the transport carriage on the support tables (14) of the platform (7). This movement is achieved by the movement of the lower frame (1), and accordingly of the carriage, in the "X" axis, and by the movement of the platform (7) in the "Y" axis at the same time.

This optimizes working times by taking advantage of the movements of the carriage to position its platform (7) at the corresponding height. In this way, through the respective software, the appropriate orders are given so that the platform (7) of the carriage moves in height as the carriage moves towards the structure consisting of shelves (2).

When the carriage reaches the corresponding point of the structure consisting of shelves (2), the platform (7) is already at the level of the place in which the corresponding die is to be removed or deposited. In the same way, when the carriage moves towards the supply area, the movement of the platform (7) in height will be verified, so that the platform (7) is at the corresponding height to remove or deposit the corresponding die upon reaching said supply area. The option of the carriage moving according to the "X" axis up to the point where it should deposit or pick up a die and of the platform (7) moving according to the "Y" axis upon reaching this point obviously falls within the scope of the invention.

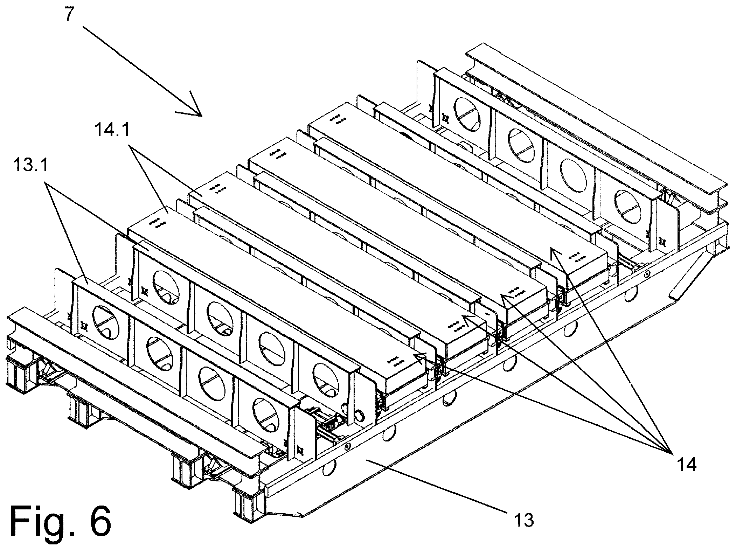

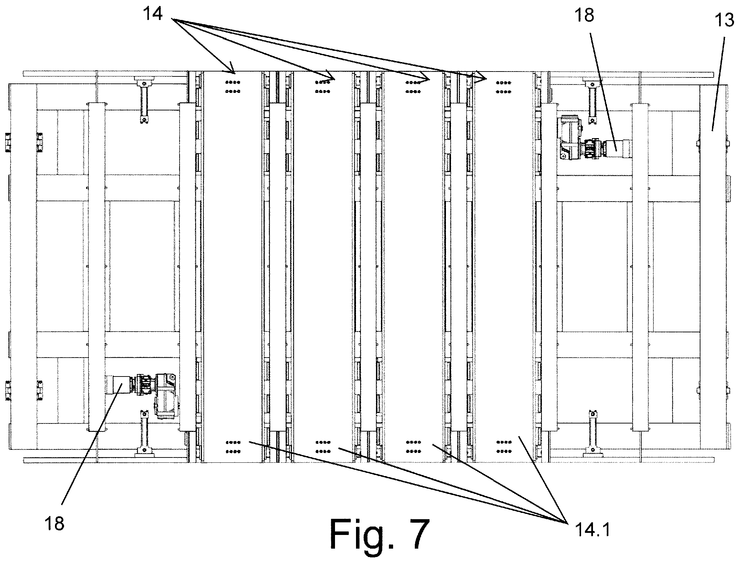

The platform (7) is made up of two different parts, one being the frame (13), see Figures 6 and 7, and the other being the set of support tables identified with reference number (14), for contacting and supporting the load to be transported.

The frame (13) has vertical profiles (13.1) for the supporting the die or load to be handled thereon.

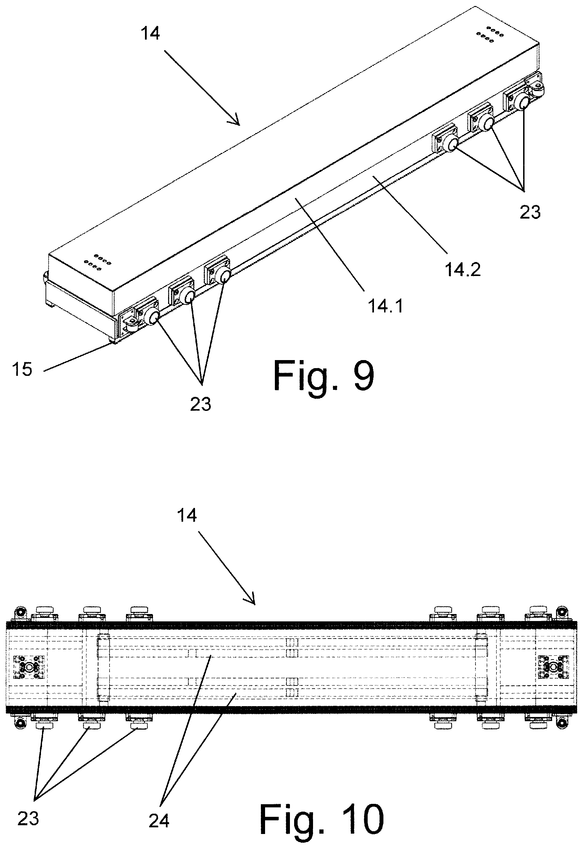

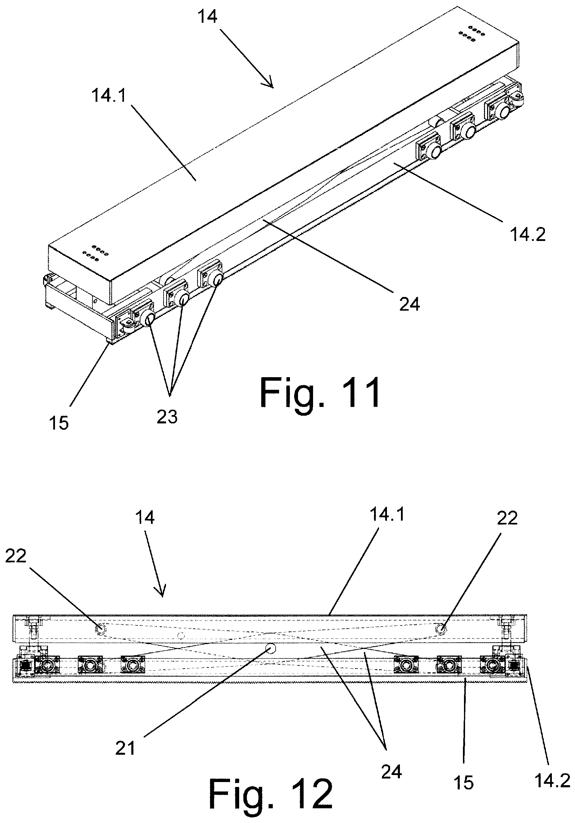

Each table (14) is made up of two parts identified with reference numbers (14.1 and 14.2) in Figure 9. Between the upper part (14.1) and the lower part (14.2) there are lifting means (24) for vertically moving the upper part (14.1) with respect to the lower part (14.2) according to the "Y" axis, as shown in Figures 9 and 11, of which Figure 9 shows the upper part (14.1) lowered and Figure 11 shows the upper part in the lifting phase.

According to a non-limiting practical embodiment, the lifting means (24) are formed by scissors with a central hinge (21) and end hinges (22), as shown in Figure 12.

Each of these support tables (14) also comprises linear movement means to be moved according to a "Z" axis, which will be referred to as the depth axis, the movement can occur both in a positive direction, through the front part of the frame (13) or through one side of the frame, and in a negative direction, when moving in the direction opposite to the previous one.

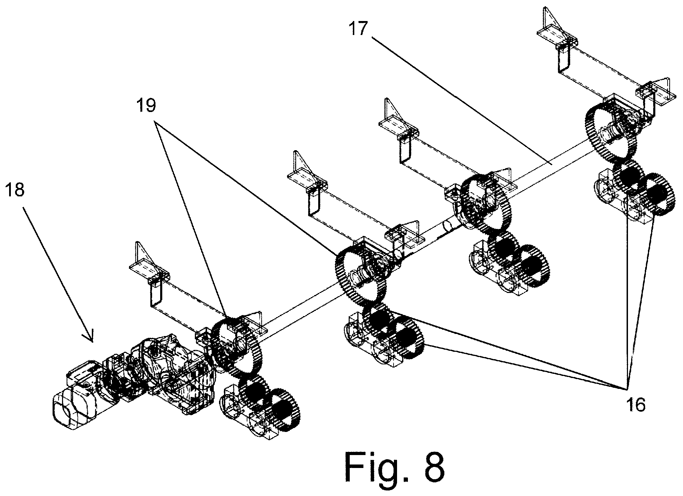

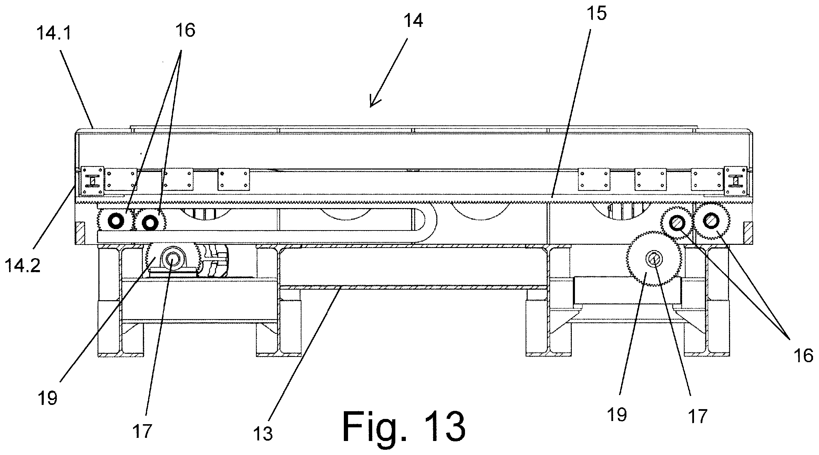

According to the invention, the aforementioned linear movement means of the tables (14) are made up, for each table (14), of a rack (15) fixed to the lower part (14.2). A gear of a gear train (16) meshes with this rack (15), one of which is coupled to a gear (19) assembled on a shaft (17) actuated by a motor (18), see Figures 7, 8, and 13.

As can be seen in Figure 7, there are two motors (18) moving respective shafts (17) and located in relation to the sides of the frame (13), such that one of these drive assemblies is intended for moving the tables (14) in one direction, according to the direction on the "Z" axis, and the other in the opposite direction.

The tables (14), and more specifically the lower part (14.2) thereof, have guiding means (23), in correspondence with channeling means, both of the frame (13) and of the shelves (2), such that the tables (14) are guided by complementary fitting of the guiding means (23) in the channeling means during movements in the "Z" axis.

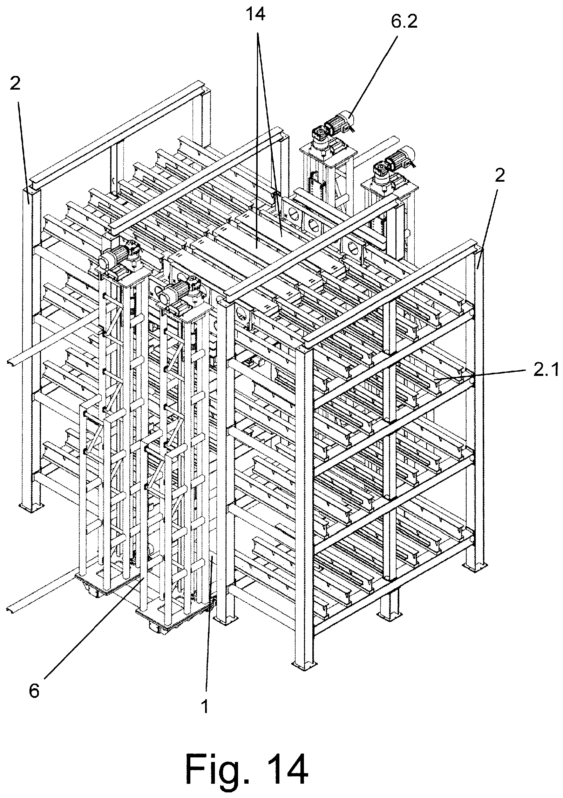

Figure 14 shows the carriage moving forward between two rows of shelves (2) with the platform (7) lifted to the upper part of the shelf (2). It can also be seen how the shelf (2) has profiles (2.1) for supporting thereon the corresponding dies or load to be handled.

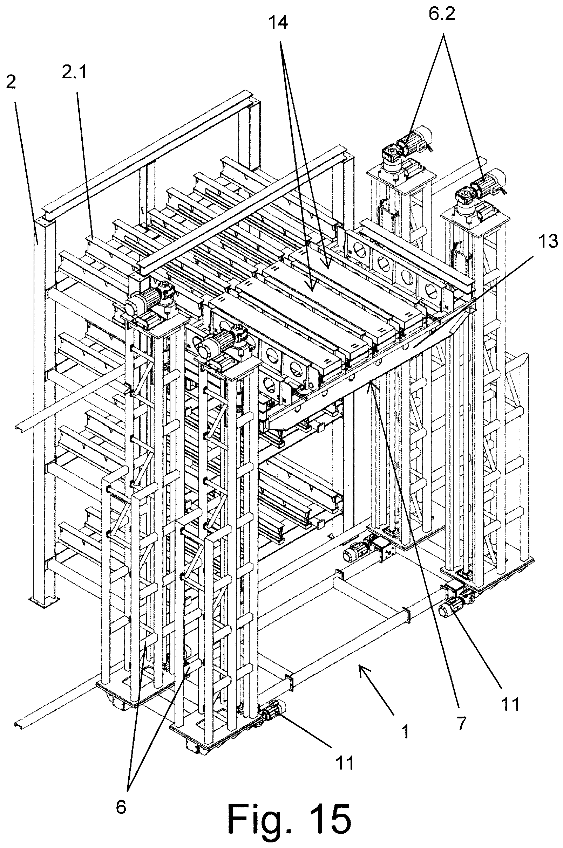

Figure 15 shows the platform (7) formed by the frame (13) and the tables (14) penetrating one of the niches of the shelf (2).

It has been envisaged that, in relation to each structure consisting of shelves (2), there is a supply area in which the die that must be carried by the transport carriage to the structure consisting of shelves (2) will be deposited or the die which is brought by the transport carriage from the structure consisting of shelves (2) will be removed by means of an overhead crane.

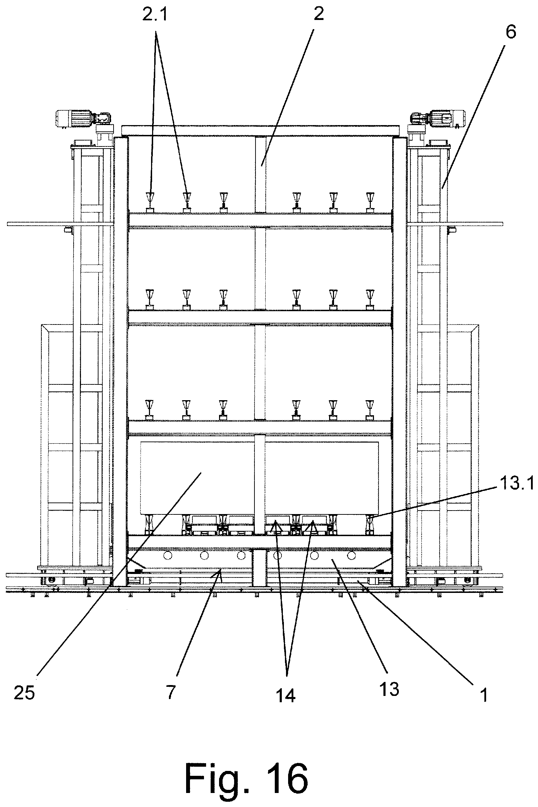

The work process is as follows: If a die, identified with reference number (25) in Figure 16, which is to be stored on a shelf (2) is arranged on the transport carriage, the carriage moves to the place of said shelf (2) where the die (25) is to be deposited.

It moves the platform (7) thereof in height through the four columns (6) until the platform is arranged at the level of the shelf (2) in question. At this point, the platform (7) is automatically fixed to the structure consisting of shelves (2), such that the platform (7) and the structure consisting of shelves (2) form a single unit.

As indicated above, the invention allows also establishing the lifting of the platform (7) along the columns (6) according to the "Y" axis as the carriage moves towards the corresponding shelf (2) following an "X" axis, such that the corresponding software will establish that the platform (7) is already at the corresponding height upon reaching the shelf (2) on which the die (25) is to be deposited.

When the platform (7) is fixed to the structure consisting of shelves (2), the tables (14), through the lifting means (24), raise their upper part (14.1) and with them the die (25) and begin their horizontal movement according to the "Z" axis, by means of the actuation established by the assembly formed by the corresponding racks (15), gears (16 and 17), and motors (18). In this horizontal movement, the tables (14) are guided by the guiding means (23) and the corresponding channelings, both of the frame (13) of the platform (7) of the carriage and of the structure consisting of shelves (2) itself, until reaching the point where the die (25) must be deposited, at which time the lifting means (24) fold up until the die (25) is deposited on the profiles (2.1) of the shelves (2).

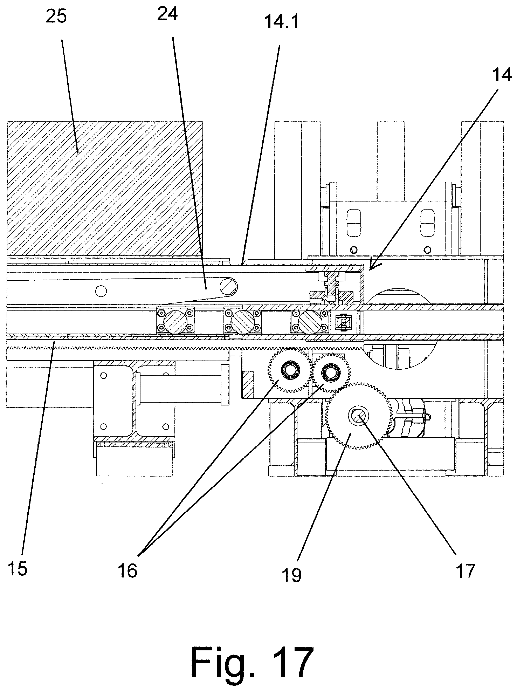

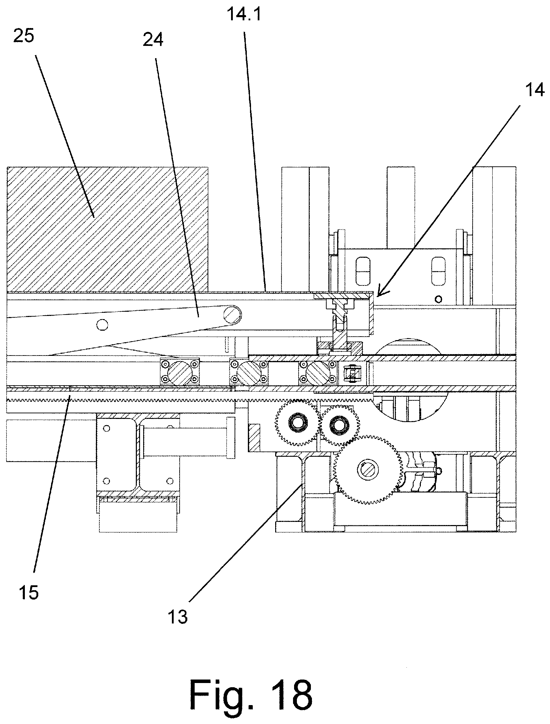

Figures 17 and 18 schematically show the tables (14) transitioning from the lifting means (24) being in a lower folding position to being in a raised position.

The process is similar but in reverse if a die (25) stored in the structure consisting of shelves (2) is to be collected. In this case, the carriage reaches the corresponding point where it must collect the die (25) and by means of the spindles actuated by the motors (6.2) of the columns (6) it moves its platform (7) vertically according to the "Y" axis until it reaches the corresponding level, at which time the platform (7) of the carriage (1) is automatically fixed to the structure consisting of shelves (2). As mentioned above, the movement of the platform (7) in "Y" can occur as the carriage (1) moves towards the shelves (2).

Once the platform (7) has been automatically fixed to the structure consisting of shelves (2), the tables (14) move horizontally according to the "Z" axis and in the lowest position of the lifting means (24) until they are positioned below the die (25). At this point, the scissors of the lifting means (24) open, raising the upper part (14.1) of the tables (14), and accordingly the die (25). This thereby allows starting the horizontal movement of the tables (14) according to the "Z" axis, but now in the opposite direction, in order to carry the die (25) until it is arranged on top of the frame (13) of the platform (7), and folding the scissors to deposit it on the profiles (13.1) of the frame (13) of the platform (7).

At this point, the fixing between the platform (7) and the structure consisting of shelves (2) is released, so that the carriage can move on its rails (3), transporting the die (25). Again in this case, the movement of the carriage in the "X" axis and the progressive lowering of the platform (7) until its frame (13) rests on the lower frame (1) of the carriage can occur simultaneously. The existence of means which guide the upper frame (13) with respect to the lower frame (1) and fix the final position of the upper frame (13) on the lower frame (1) has been envisaged.

The lifting means (24) allow the load or die (25) to be lifted with respect to the support on the profiles (2.1) of the shelves (2), such that the upper part of the tables (14) and the die (25) itself are prevented from contacting or brushing against the shelves (2) during the placement and removal of the die.

The entire loading and unloading process is fully automatic and does not require the participation of operators.

## Claims

1. An automatic system for the storage and retrieval of dies, comprising a transport carriage that is configured to carry dies during their supply to or removal from a structure consisting of shelves, wherein: the transport carriage is made up of a lower frame (1) and an upper frame (13), the latter being part of a platform (7) which furthermore incorporates at least one support table (14); the lower frame (1) has drive means (11) for establishing the movement of the carriage according to the "X" axis; each support table (14) is formed by an upper part (14.1) and a lower part (14.2), incorporating linear movement means for the linear movement of both parts (14.1 and 14.2) according to a "Z" axis; and each support table (14) has lifting means (24) for lifting its upper part (14.1), wherein:
the carriage is configured to move in "X" simultaneously with movement of the platform (7) in "Y", so that the platform (7) is arranged at the suitable height for collecting or depositing a die upon reaching the corresponding shelf (2); and
the platform (7) incorporates two or more tables (14), **characterized in that** the lower frame (8) incorporates four vertical columns (6), along which the platform (7) is configured to move in height according to a "Y" axis, and **in that** the lower part (14.2) of each table (14) has a rack (15) on which a gear meshes, which gear is in turn coupled to a gear train (16) assembled in the frame (13) and independent for each table (14), such that it is possible to thereby establish the movements of the tables (14) in "Z".

2. The automatic system for the storage and retrieval of dies according to the preceding claim, wherein the lower frame (1) of the carriage incorporates rolling means (4) for rolling in relation to at least one rail (5) fixed to the structure consisting of shelves (2) and in that the columns (6) also incorporate rolling means (8) for rolling in relation to at least one rail (9) fixed to the structure consisting of shelves (2), so as to thereby establish a lower guiding and an upper guiding for the carriage moving in "X".

3. The automatic system for the storage and retrieval of dies according to claim 1, wherein at the upper end of each column (6) there is arranged a motor (6.2) which, preferably through a spindle and nut transmission, establishes the movement of the platform (7) in "Y", with all the motors (6.2) being synchronized, so that the platform (7) remains horizontal during its movement in "Y".

4. The automatic system for the storage and retrieval of dies according to claim 1, wherein there are arranged in the frame (13) two motors (18) which can move respective shafts (17) in which the gears (19) coupled to the gear trains (16) are assembled, these drive assemblies being arranged in relation to two opposite sides of the frame (13) in order to carry out the movement of the tables (14) in "Z", in one direction and in the opposite direction.

5. The automatic system for the storage and retrieval of dies according to claim 1, wherein the lower part (14.2) of each table (14) has guiding means (23) in correspondence with respective channelings of the frame (13) and of the structure consisting of shelves (2), for guiding the tables (14) during their movements in "Z".

6. The automatic system for the storage and retrieval of dies according to claim 1, wherein the lifting means (24) of each table (14) are scissor-type mechanisms.

## Patentansprüche

1. Automatisches System zum Einlagern und Auslagern von Formen, umfassend einen Transportwagen, der dazu konfiguriert ist, Formen während ihrer Zufuhr zu oder Entnahme aus einer Struktur, die aus Regalen besteht, zu tragen, wobei: der Transportwagen aus einem unteren Rahmen (1) und einem oberen Rahmen (13) hergestellt ist, wobei letzterer Teil einer Plattform (7) ist, die ferner mindestens eine Stützplatte (14) beinhaltet; der untere Rahmen (1) Antriebsmittel (11) zum Schaffen der Bewegung des Wagens gemäß der "X"-Achse aufweist;
jede Stützplatte (14) durch einen oberen Teil (14.1) und einen unteren Teil (14.2) ausgebildet ist, die Linearbewegungsmittel für die Linearbewegung beider Teile (14.1 und 14.2) gemäß einer "Z"-Achse beinhalten; und jede Stützplatte (14) Hubmittel (24) zum Anheben seines oberen Teils (14.1) aufweist, wobei:
der Wagen dazu konfiguriert ist, sich in "X" gleichzeitig mit der Bewegung der Plattform (7) in "Y" zu bewegen, sodass die Plattform (7) in der geeigneten Höhe zum Sammeln oder Ablegen einer Form beim Erreichen des entsprechenden Regals (2) angeordnet ist; und
die Plattform (7) zwei oder mehr Platten (14) beinhaltet, **dadurch gekennzeichnet, dass** der untere Rahmen (8) vier vertikale Säulen (6) beinhaltet, entlang derer sich die Plattform (7) in der Höhe gemäß einer "Y"-Achse zu bewegen konfiguriert ist, und dass der untere Teil (14.2) jeder Platte (14) eine Zahnstange (15) aufweist, an der ein Zahnrad kämmt, wobei das Zahnrad wiederum mit einem in dem Rahmen (13) montierten und für jede Platte (14) unabhängigen Zahnradsatz (16) gekoppelt ist, sodass es möglich ist, dadurch die Bewegungen der Platten (14) in "Z" zu schaffen.

2. Automatisches System zum Einlagern und Auslagern von Formen nach dem vorhergehenden Anspruch, wobei der untere Rahmen (1) des Wagens Rollmittel (4) zum Rollen in Bezug auf mindestens eine Schiene (5) beinhaltet, die an der Struktur befestigt ist, die aus Regalen (2) besteht, und dadurch, dass die Säulen (6) auch Rollmittel (8) zum Rollen in Bezug auf mindestens eine Schiene (9) beinhalten, die an der Struktur befestigt ist, die aus Regalen (2) besteht, um dadurch eine untere Führung und eine obere Führung für den Wagen zu schaffen, der sich in "X" bewegt.

3. Automatisches System zum Einlagern und Auslagern von Formen nach Anspruch 1, wobei an dem oberen Ende jeder Säule (6) ein Motor (6.2) angeordnet ist, der, vorzugsweise über ein Spindel-Mutter-Getriebe, die Bewegung der Plattform (7) in "Y" schafft, wobei alle Motoren (6.2) synchronisiert sind, sodass die Plattform (7) während ihrer Bewegung in "Y" horizontal bleibt.

4. Automatisches System zum Einlagern und Auslagern von Formen nach Anspruch 1, wobei in dem Rahmen (13) zwei Motoren (18) angeordnet sind, die jeweilige Wellen (17) bewegen können, in denen die mit den Zahnradsätzen (16) gekoppelten Zahnräder (19) montiert sind, wobei diese Antriebsbaugruppen in Bezug auf zwei gegenüberliegende Seiten des Rahmens (13) angeordnet sind, um die Bewegung der Platten (14) in "Z", in eine Richtung und in die entgegengesetzte Richtung, auszuführen.

5. Automatisches System zum Einlagern und Auslagern von Formen nach Anspruch 1, wobei der untere Teil (14.2) jeder Platte (14) Führungsmittel (23) in Übereinstimmung mit jeweiligen Rinnen des Rahmens (13) und der aus Regalen (2) bestehenden Struktur aufweist, um die Platten (14) während ihrer Bewegungen in "Z" zu führen.

6. Automatisches System zum Einlagern und Auslagern von Formen nach Anspruch 1, wobei die Hubmittel (24) jeder Platte (14) Scherenmechanismen sind.

## Revendications

1. Système automatique permettant le stockage et la récupération de poinçons, comprenant un chariot de transport qui est conçu pour porter des poinçons pendant leur introduction sur une structure constituée d'étagères ou leur retrait de celle-ci, dans lequel : le chariot de transport consiste en un cadre inférieur (1) et un cadre supérieur (13), ce dernier faisant partie d'une plate-forme (7) qui incorpore en outre au moins une table de support (14) ; le cadre inférieur (1) comporte un moyen d'entraînement (11) pour établir le mouvement du chariot selon l'axe « X » ;
chaque table de support (14) est formée par une pièce supérieure (14.1) et une pièce inférieure (14.2), incorporant un moyen de mouvement linéaire pour le mouvement linéaire des deux pièces (14.1 et 14.2) selon un axe « Z » ; et chaque table de support (14) comporte un moyen de levage (24) pour soulever sa pièce supérieure (14.1), dans lequel :
le chariot est conçu pour se déplacer en « X » simultanément au mouvement de la plate-forme (7) en « Y », de sorte que la plate-forme (7) est agencée à la hauteur appropriée pour collecter ou déposer un poinçon lorsqu'elle atteint l'étagère correspondante (2) ; et
la plate-forme (7) incorpore deux tables (14) ou plus, **caractérisé en ce que** le cadre inférieur (8) incorpore quatre colonnes verticales (6), le long desquelles la plate-forme (7) est conçue pour se déplacer en hauteur selon un axe « Y », et **en ce que** la partie inférieure (14.2)
de chaque table (14) comporte une crémaillère (15) sur laquelle s'engrène un engrenage, lequel engrenage est à son tour couplé à un train d'engrenages (16) assemblé dans le cadre (13) et indépendant pour chaque table (14), de sorte qu'il est possible d'établir ainsi les mouvements des tables (14) en « Z ».

2. Système automatique permettant le stockage et la récupération de poinçons selon la revendication précédente, dans lequel le cadre inférieur (1) du chariot incorpore un moyen de roulement (4) pour rouler par rapport à au moins un rail (5) fixé à la structure constituée d'étagères (2) et en ce que les colonnes (6) incorporent également un moyen de roulement (8) pour rouler par rapport à au moins un rail (9) fixé à la structure constituée d'étagères (2), de manière à établir ainsi un guidage inférieur et un guidage supérieur pour le chariot se déplaçant en « X ».

3. Système automatique permettant le stockage et la récupération de poinçons selon la revendication 1, dans lequel à l'extrémité supérieure de chaque colonne (6) est agencé un moteur (6.2) qui, de préférence par l'intermédiaire d'une transmission à broche et écrou, établit le mouvement de la plate-forme (7) en « Y », tous les moteurs (6.2) étant synchronisés,
de sorte que la plate-forme (7) reste horizontale pendant son mouvement en « Y ».

4. Système automatique permettant le stockage et la récupération de poinçons selon la revendication 1, dans lequel deux moteurs (18) sont agencés dans le cadre (13), qui peuvent déplacer des arbres respectifs (17) où les engrenages (19) couplés aux trains d'engrenages (16) sont assemblés, ces ensembles d'entraînement étant agencés par rapport à deux côtés opposés du cadre (13) afin d'effectuer le mouvement des tables (14) en « Z », dans une direction et dans la direction opposée.

5. Système automatique permettant le stockage et la récupération de poinçons selon la revendication 1, dans lequel la partie inférieure (14.2) de chaque table (14) comporte un moyen de guidage (23) en correspondance avec des canaux respectifs du cadre (13) et de la structure constituée d'étagères (2), pour guider les tables (14) pendant leurs mouvements en « Z ».

6. Système automatique permettant le stockage et la récupération de poinçons selon la revendication 1, dans lequel les moyens de levage (24) de chaque table (14) sont des mécanismes de type ciseaux.
